# FASCICULE DE BREVET EUROPEEN

(11) **EP 2 623 001 B1**
(45) Date de publication et mention de la délivrance du brevet: **01.07.2015**
(21) Numéro de dépôt: 13153736.7
(22) Date de dépôt: 01.02.2013
(51) Int. Cl.: A47J 43/07

(54) **Appareil électroménager de préparation culinaire prévu pour être tenu à la main comportant un élément de façade rapporté**
Haushaltsgerät zur Essenszubereitung, das zum Halten in der Hand konzipiert und mit einem aufgesetzten Spritzschutzelement ausgestattet ist
Household cooking appliance designed to be hand-held comprising an added façade element

(30) Priorité: 06.02.2012 FR 1251098
(43) Date de publication de la demande: 07.08.2013
(73) Titulaire: SEB S.A., 69130 Ecully (FR)
(72) Inventeur: Hamelin, Franck, 50490 Saint-Sauveur-Lendelin (FR)
(74) Mandataire: Bourrières, Patrice

(56) Documents cités:
- EP-A1- 1 483 997
- WO-A2-2010/012732

## Description

La présente invention concerne le domaine technique général des appareils électroménagers de préparation culinaire tenus à la main comprenant un boîtier renfermant un moteur, tel qu'un boîtier moteur de mixeur plongeant, et concerne plus particulièrement un appareil électroménager comportant un élément de façade rapporté comprenant une surface externe définissant au moins une partie visible du boîtier.

Il est connu, du document WO 2010 012732, un mixeur plongeant comprenant un boîtier comportant une coque revêtue de plusieurs éléments de façade rapportés, les éléments de façade comprenant une surface externe définissant une partie visible du boîtier. Dans ce document, les éléments de façade sont disposés bord à bord et sont maintenus par clipsage sur la coque du boîtier de sorte qu'il résulte un jeu entre les éléments de façade.

Un tel jeu, en bordure des éléments de façade, présente l'inconvénient de constituer un nid dans lequel des saletés peuvent s'accumuler et dégrader l'aspect visuel et qualitatif de l'appareil. De plus, la présence d'un tel jeu permet un mouvement des éléments de façade qui peuvent entrer en vibration lors du fonctionnement du moteur de l'appareil et générer un bruit désagréable.

L'invention qui suit vise à pallier ces inconvénients en proposant un appareil électroménager de préparation culinaire dans lequel le montage de l'élément de façade est amélioré.

Le but de l'invention est atteint par un appareil électroménager de préparation culinaire prévu pour être tenu à la main comprenant un boîtier renfermant un moteur et comportant un élément de façade rapporté comprenant une surface externe définissant au moins une partie visible du boîtier, caractérisé en ce que l'élément de façade est maintenu sur le boîtier au moyen d'une pièce de fixation venant bord à bord avec l'élément de façade, la pièce de fixation comportant au moins une partie en matériau souple réalisant l'accostage avec l'élément de façade.

Une telle caractéristique présente l'avantage de permettre une déformation de la partie de la pièce de fixation venant bord à bord avec l'élément de façade, ce qui permet d'obtenir une pièce de fixation venant au contact permanent de l'élément de façade, sans interposition d'un jeu, qui participe à l'amortissement des vibrations de l'élément de façade.

Par matériau souple, on entend un matériau avec une dureté Shore A inférieure ou égale à 70 et préférentiellement inférieure ou égale à 50.

Selon une autre caractéristique de l'invention, l'appareil comporte un pied de mixage venant s'accoupler de manière amovible à une extrémité longitudinale du boîtier, la pièce de fixation étant interposée entre le pied de mixage et l'élément de façade rapporté et comportant, à l'opposé de la partie en matériau souple réalisant l'accostage avec l'élément de façade, une surface d'appui en matériau souple venant bord à bord avec le pied de mixage.

De manière avantageuse, la dureté du matériau sera adaptée pour qu'il se produise un écrasement de l'ordre de 0,3 mm de la partie en matériau souple lors de l'accouplement du pied de mixage sur le boitier.

Selon une autre caractéristique de l'invention, la pièce de fixation est un anneau de fixation engagé sur l'extrémité longitudinale du boîtier s'accouplant au pied de mixage.

Selon une autre caractéristique de l'invention, le boîtier comporte une coquille supérieure et une coquille inférieure assemblées l'une sur l'autre, l'anneau de fixation participant au maintien des coquilles supérieure et inférieure l'une contre l'autre.

Selon d'autres modes particuliers de réalisation, l'appareil électroménager selon l'invention peut comprendre l'une ou plusieurs des caractéristiques suivantes prises isolément ou selon toutes les combinaisons techniquement possibles :
- l'anneau de fixation comporte un diamètre interne présentant des éléments de verrouillage assurant l'immobilisation de l'anneau de fixation sur le boîtier,
- les éléments de verrouillage sont constitués par des protubérances venant s'engager élastiquement dans des rainures ménagées sur les coquilles supérieure et inférieure du boîtier,
- l'anneau de fixation comporte une âme rigide annulaire comportant une surface interne venant au contact des coquilles supérieure et inférieure du boîtier,
- l'âme rigide annulaire est recouverte d'une peau souple sur sa périphérie externe, la peau souple débordant axialement de l'âme rigide,
- l'âme rigide est réalisée en matériau plastique,
- la peau souple est réalisée en matériau élastomère.

On comprendra mieux les buts, aspects et avantages de la présente invention d'après la description donnée ci-après d'un mode particulier de réalisation de l'invention présenté à titre d'exemple non limitatif, en se référant aux dessins annexés dans lesquels :
- la figure 1 est une vue de face d'un appareil électroménager selon un mode particulier de réalisation de l'invention, le boîtier moteur de l'appareil étant représenté accouplé à un pied de mixage;
- la figure 2 est une vue en perspective du pied de mixage de la figure 1 représenté seul;
- la figure 3 est une vue en perspective éclatée du boîtier moteur de la figure 1 ;
- Les figures 4A et 4B sont des vues en perspective du boîtier moteur de la figure 1 avec l'anneau de fixation respectivement en position désassemblée et assemblée;
- La figure 5 est une vue en perspective de l'anneau de fixation de l'élément de façade;
- La figure 6 est une vue en perspective éclatée de l'anneau de fixation de la figure 5.

Seuls les éléments nécessaires à la compréhension de l'invention ont été représentés. Pour faciliter la lecture des dessins, les mêmes éléments portent les mêmes références d'une figure à l'autre.

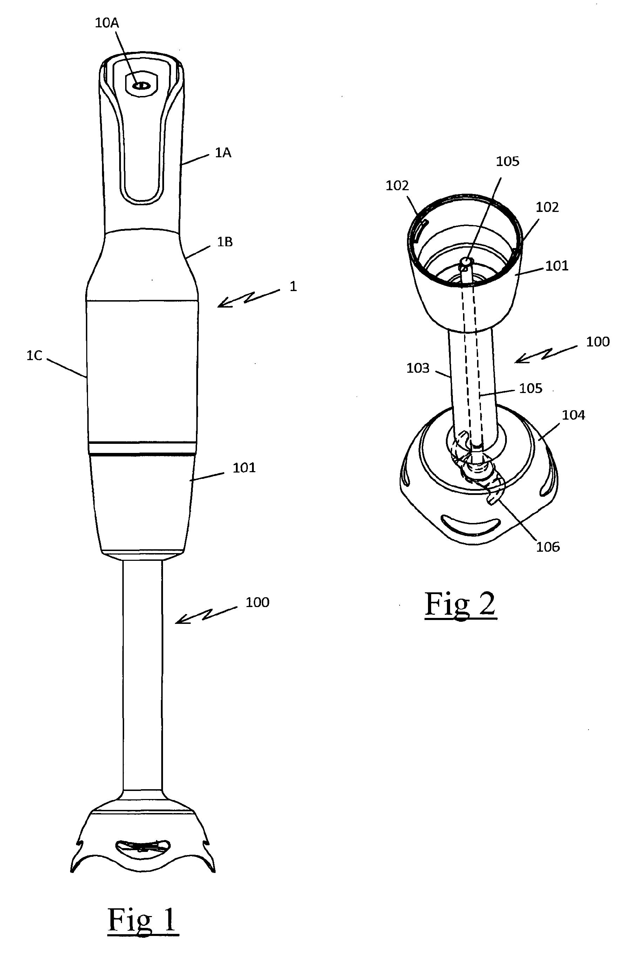

La figure 1 représente une vue de face d'un appareil électroménager, de type mixeur plongeant, comportant un boîtier 1 présentant un corps de forme allongée dont une extrémité longitudinale est accouplée de manière amovible à un pied de mixage 100, le corps du boîtier 1 présentant une partie supérieure 1A de plus faible diamètre constituant une zone de préhension.

Conformément à la figure 2, le pied de mixage 100 comprend une bague d'accouplement 101 munie de deux ergots de verrouillage 102, la bague d'accouplement 101 étant reliée à un fût tubulaire 103 comprenant une extrémité inférieure solidaire d'une cloche de protection 104 hémisphérique.

De manière connue en soi, le fût tubulaire 103 renferme un arbre d'entraînement 105 comprenant une extrémité inférieure solidaire d'un outil coupant 106 s'étendant à l'intérieur de la cloche de protection 104 et une extrémité supérieure débouchant au sein de la bague d'accouplement 101.

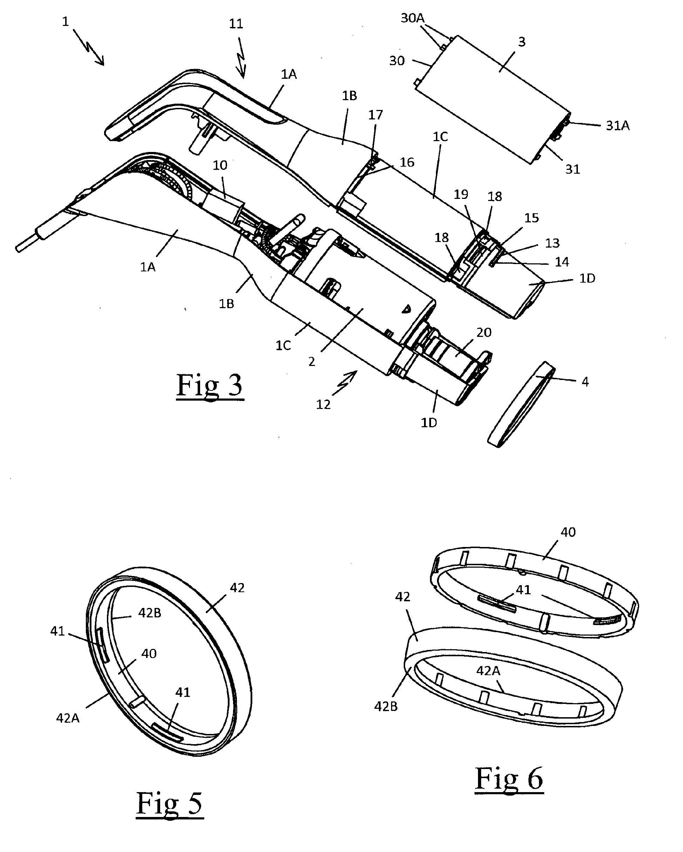

Conformément à la figure 3, le corps du boîtier 1 comprend une coquille supérieure 11 et une coquille inférieure 12 assemblées l'une sur l'autre, les coquilles supérieure 11 et 12 étant préférentiellement réalisées par moulage dans un matériau thermoplastique de type ABS (Acrylonitrile Butadiène Styrène).

Le boîtier 1 présente une partie centrale 1C ventrue renfermant un moteur 2 électrique alimenté par un circuit de commande 10 disposé dans la partie supérieure 1A du boîtier, le circuit de commande 10 comprenant un bouton 10A, visible sur la figure 1, sur lequel l'utilisateur doit appuyer constamment pour faire fonctionner le moteur 2, ce bouton 10A étant avantageusement disposé au sommet de la zone de préhension du boîtier 1.

Le moteur 2 est relié à un entraîneur rotatif 20 s'étendant dans une partie inférieure 1D légèrement conique constituant une zone d'accouplement avec le pied de mixage 100, la partie inférieure 1D présentant une surface externe munie de deux rampes de verrouillage 13 disposées à 180° l'une de l'autre, chaque rampe de verrouillage 13 comportant une extrémité d'engagement munie d'un bossage 14 et une extrémité terminale munie d'une butée 15.

Plus particulièrement selon l'invention, le boîtier 1 comporte un élément de façade 3 rapporté qui vient se positionner sur le boîtier 1, cet élément de façade 3 étant avantageusement disposé au niveau d'une empreinte de forme complémentaire ménagée sur la partie centrale 1C de la coquille supérieure 11.

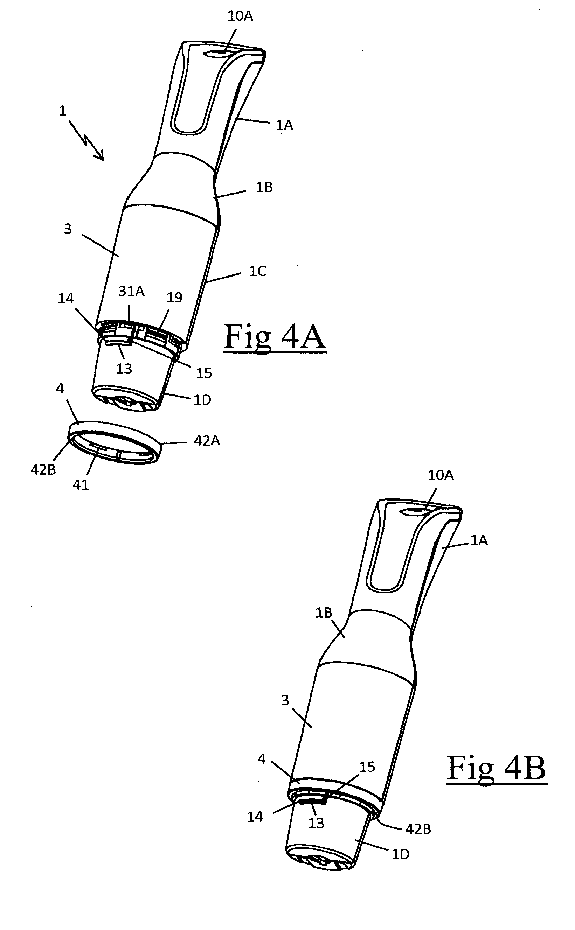

Conformément à la figure 4A, l'élément de façade 3 rapporté vient combler l'empreinte de la coquille supérieure 11 et présente un bord supérieur 30 venant bord à bord avec une partie intermédiaire 1B du boîtier 1, sensiblement conique, s'étendant entre la partie centrale 1C et la partie supérieure 1A.

De manière préférentielle, l'élément de façade 3 comporte une surface externe venant dans le prolongement de la surface externe de la partie intermédiaire 1B de la coquille supérieure 11, cette dernière étant avantageusement constituée par un revêtement élastomère thermoplastique de type SEBS (copolymère à blocs styrène-éthylène-butylène) obtenu par surmoulage sur le matériau ABS de la coquille supérieure 11 du boîtier et comportant un bord inférieur 16 en matériau élastomère venant au contact de l'élément de façade 3 rapporté.

Le bord supérieur 30 de l'élément de façade 3 comprend des doigts 30A en saillie qui viennent s'engager dans des orifices 17 ménagés au niveau de la partie centrale 1C de la coquille supérieure 11, en bordure du bord de la partie intermédiaire 1B, ces doigts 30A assurant l'immobilisation du bord supérieur 30 de l'élément de façade 3 sur la coquille supérieure 11 selon une direction radiale au boîtier 1.

L'élément de façade 3 est maintenu sur le boîtier 1 au moyen d'un anneau de fixation 4 venant bord à bord avec un bord inférieur 31 de l'élément de façade 3, ce dernier comprenant des doigts 31A en saillie venant s'engager dans des cavités 18 ménagées dans la coquille supérieure 11 du boîtier, en bordure de la partie inférieure 1D et sous l'anneau de fixation 4, ainsi que cela est illustré sur la figure 4B, de sorte que l'anneau de fixation 4 assure à fois le blocage axial de l'élément de façade 3 sur la coquille supérieure 11 et l'immobilisation du bord inférieur 31 de l'élément de façade 3 selon une direction radiale au boîtier 1.

Conformément aux figures 5 et 6, l'anneau de fixation 4 comprend une âme rigide 40 annulaire, avantageusement réalisée en matériau plastique ABS, comportant une surface interne venant au contact des coquilles supérieure 11 et inférieure 12 du boîtier pour assurer le maintien de ces dernières l'une contre l'autre. L'âme rigide 40 comporte des protubérances de verrouillage 41 faisant saillie sur la surface interne de l'anneau de fixation 4 et venant s'engager élastiquement dans des rainures 19 ménagées sur la coquille supérieure 11 pour immobiliser axialement l'anneau de fixation 4 sur le boîtier 1 dans une position de verrouillage, illustrée sur la figure 4B dans laquelle l'élément de façade 3 est bloqué axialement en étant pris en sandwich entre l'anneau de fixation 4 et le bord inférieur 16 de la partie intermédiaire 1B.

L'âme rigide 40 de l'anneau de fixation 4 est revêtue d'une peau 42 en matériau souple sur sa périphérie externe, qui est représentée dissociée de l'âme rigide 40 sur la figure 6, cette peau 42 étant préférentiellement obtenue par surmoulage d'un matériau élastomère thermoplastique de type SEBS sur l'âme rigide 40.

La peau 42 souple comporte une surface externe venant dans le prolongement de la surface externe de l'élément de façade 3 lorsque l'anneau de fixation 4 est amené sur le boîtier 1 dans la position de verrouillage, la peau 42 souple comportant d'un côté une lèvre supérieure 42A débordant axialement de l'âme rigide 40 et de l'autre côté une surface d'appui 42B annulaire recouvrant l'extrémité axiale inférieure de l'âme rigide 40.

La lèvre supérieure 42A réalise l'accostage avec l'élément de façade 3 lorsque l'anneau de fixation 4 est immobilisé sur le boîtier 1 dans la position de verrouillage de sorte que l'élément de façade 3 est pris axialement en sandwich en étant comprimé entre la lèvre supérieure 42A de l'anneau de fixation 4 et le bord inférieur 16 de la partie intermédiaire 1B recouvert de matériau élastomère. Il s'ensuit une parfaite immobilisation de l'élément de façade 3 grâce à la pression permanente exercée axialement par la lèvre supérieure 42A sur l'élément de façade 3, et une réduction du bruit généré par la vibration de l'élément de façade 3 lors du fonctionnement du moteur 2. De plus, l'absence de jeu en bordure de l'élément de façade 3 permet d'éviter l'insertion de salissures. Enfin, l'âme rigide 40 de l'anneau de fixation 4 présente l'avantage d'assurer un parfait maintien de la coquille supérieure 11 sur la coquille inférieure 12 au niveau de la partie inférieure du boîtier 1.

Le boîtier 1 ainsi réalisé est accouplé au pied de mixage 100, ainsi que cela est illustré sur la figure 1, en amenant la bague d'accouplement 101 du pied de mixage 100 sur la partie inférieure 1D du boîtier 1 de telle sorte que l'extrémité supérieure de l'arbre d'entraînement 105 s'engage dans l'entraîneur rotatif 20 du boîtier 1 et que le bord supérieur de la bague d'accouplement 101 vienne en appui contre la surface d'appui 42B annulaire souple de l'anneau de fixation 4.

Le pied de mixage 100 est alors tourné de quelques degrés sur lui-même pour amener les ergots 102 de la bague d'accouplement 101 sur les rampes de verrouillage 13 de la partie inférieure 1D du boîtier, cette opération s'effectuant en comprimant légèrement la peau 42 souple de l'anneau de fixation 4. Le verrouillage du pied de mixage 100 en position accouplée s'effectue alors en tournant le pied de mixage 100 jusqu'à ce que les ergots 102 parviennent contre la butée 15 des rampes de verrouillage 13, les ergots 102 se trouvant alors engagés derrière les bossages 14 et assurant l'immobilisation en rotation du pied de mixage 100, cette immobilisation étant renforcée par les forces de friction générées par l'appui sous contrainte du bord supérieur de la bague d'accouplement 101 contre la peau souple 42 de l'anneau de fixation 4.

On obtient ainsi un verrouillage simple et efficace du pied de mixage sur le boîtier, la surface d'appui souple de l'anneau de fixation travaillant en combinaison avec les bossages des rampes de verrouillage pour offrir un verrouillage sûr et ergonomique. De plus, la compression de la surface d'appui souple de l'anneau de fixation par le pied de mixage permet l'obtention d'une liaison boîtier-pied de mixage sans jeu limitant la génération de bruits lors du fonctionnement de l'appareil.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'anneau de fixation pourra être réalisé intégralement dans un matériau souple.

## Revendications

1. Appareil électroménager de préparation culinaire prévu pour être tenu à la main comprenant un boîtier (1) renfermant un moteur (2) et comportant un élément de façade (3) rapporté comprenant une surface externe définissant au moins une partie visible dudit boîtier (1), **caractérisé en ce que** ledit élément de façade (3) est maintenu sur le boîtier (1) au moyen d'une pièce de fixation (4) venant bord à bord avec l'élément de façade (3) et **en ce que** ladite pièce de fixation (4) comporte au moins une partie (42A) en matériau avec une dureté Shore A inférieure ou égale à 70, réalisant l'accostage avec l'élément de façade (3).

2. Appareil électroménager selon la revendication 1, **caractérisé en ce qu'**il comporte un pied de mixage (100) venant s'accoupler de manière amovible à une extrémité longitudinale dudit boîtier (1) et **en ce que** ladite pièce de fixation (4) est interposée entre le pied de mixage (100) et l'élément de façade (3) rapporté, la pièce de fixation (4) comportant, à l'opposé de la partie (42A) réalisant l'accostage avec l'élément de façade (3), une surface d'appui (42B) en matériau avec une dureté Shore A inférieure ou égale à 70 venant bord à bord avec le pied de mixage (100).

3. Appareil électroménager selon la revendication 2, **caractérisé en ce que** la pièce de fixation (4) est un anneau de fixation engagé sur l'extrémité longitudinale du boîtier (1) s'accouplant au pied de mixage (100).

4. Appareil électroménager selon la revendication 3, **caractérisé en ce que** le boîtier (1) comporte une coquille supérieure (11) et une coquille inférieure (12) assemblées l'une sur l'autre et **en ce que** l'anneau de fixation (4) participe au maintien des coquilles supérieure (11) et inférieure (12) l'une contre l'autre.

5. Appareil électroménager selon la revendication 4, **caractérisé en ce que** l'anneau de fixation (4) comporte un diamètre interne présentant des éléments de verrouillage (41) assurant l'immobilisation de l'anneau de fixation (4) sur le boîtier (1).

6. Appareil électroménager selon la revendication 5, **caractérisé en ce que** lesdits éléments de verrouillage sont constitués par des protubérances (41) venant s'engager élastiquement dans des rainures (19) ménagées sur les coquilles supérieure et inférieure du boîtier.

7. Appareil électroménager selon l'une quelconque des revendications 4 à 6, **caractérisé en ce que** l'anneau de fixation (4) comporte une âme rigide (40) annulaire comportant une surface interne venant au contact des coquilles supérieure (11) et inférieure (12) du boîtier.

8. Appareil électroménager selon la revendication 7, **caractérisé en ce que** l'âme rigide (40) annulaire est recouverte d'une peau (42) réalisée dans un matériau présentant une dureté Shore A inférieure ou égale à 70 sur sa périphérie externe, ladite peau (42) débordant axialement de l'âme rigide.

9. Appareil électroménager selon l'une quelconque des revendications 7 à 8, **caractérisé en ce que** l'âme rigide (40) est réalisée en matériau plastique.

10. Appareil électroménager selon l'une quelconque des revendications 1 à 9, **caractérisé en ce que** la peau (42) est réalisée en matériau élastomère.

## Patentansprüche

1. Elektrohaushaltsgerät zur Zubereitung von Speisen, das dafür vorgesehen ist, in der Hand gehalten zu werden, mit einem Gehäuse (1), das einen Motor (2) umschließt und ein angebrachtes stirnseitiges Element (3) mit einer Außenfläche umfasst, die zumindest einen sichtbaren Teil des genannten Gehäuses (1) definiert, **dadurch gekennzeichnet, dass** das genannte stirnseitige Element (3) mit Hilfe eines Befestigungsteils (4) an dem Gehäuse (1) gehalten wird, das mit dem stirnseitigen Element (3) Kante an Kante aneinanderstößt, und dass das genannte Befestigungsteil (4) zumindest ein Teil (42A) aus einem Material mit einer Shore-Härte A von höchstens 70 umfasst, das das Anliegen an dem stirnseitigen Element (3) bewirkt.

2. Elektrohaushaltsgerät nach Anspruch 1, **dadurch gekennzeichnet, dass** es einen Mixfuß (100) umfasst, der sich abnehmbar an ein Längsende des genannten Gehäuses (1) kuppeln lässt, und dass das genannte Befestigungsteil (4) zwischen dem Mixfuß (100) und dem angebrachten stirnseitigen Element (3) angeordnet ist, wobei das Befestigungsteil (4) dem Teil (42A), das das Anliegen an dem stirnseitigen Element (3) bewirkt, entgegengesetzt eine Auflagefläche (42B) aus einem Material mit einer Shore-Härte A von höchstens 70 aufweist, die Kante an Kante mit dem Mixfuß (100) liegt.

3. Elektrohaushaltsgerät nach Anspruch 2, **dadurch gekennzeichnet, dass** das Befestigungsteil (4) ein Befestigungsring ist, der am Längsende des Gehäuses (1) sitzt, das an den Mixfuß (100) gekuppelt wird.

4. Elektrohaushaltsgerät nach Anspruch 3, **dadurch gekennzeichnet, dass** das Gehäuse (1) ein oberes Gehäuseteil (11) und ein unteres Gehäuseteil (12) umfasst, die zusammengebaut sind, und dass der Befestigungsring (4) an der Fixierung des oberen Gehäuseteils (11) an dem unteren Gehäuseteil (12) beteiligt ist.

5. Elektrohaushaltsgerät nach Anspruch 4, **dadurch gekennzeichnet, dass** der Befestigungsring (4) einen Innendurchmesser umfasst, der Verriegelungselemente (41) aufweist, die die Blockierung des Befestigungsrings (4) an dem Gehäuse (1) sicherstellen.

6. Elektrohaushaltsgerät nach Anspruch 5, **dadurch gekennzeichnet, dass** die genannten Verriegelungselemente aus Vorsprüngen (41) bestehen, die elastisch in Nuten (19) einrasten, die in dem oberen und dem unteren Gehäuseteil des Gehäuses vorgesehen sind.

7. Elektrohaushaltsgerät nach einem der Ansprüche 4 bis 6, **dadurch gekennzeichnet, dass** der Befestigungsring (4) einen ringförmigen starren Steg (40) umfasst, der eine Innenfläche aufweist, die mit dem oberen (11) und dem unteren (12) Gehäuseteil des Gehäuses in Kontakt kommt.

8. Elektrohaushaltsgerät nach Anspruch 7, **dadurch gekennzeichnet, dass** der ringförmige starre Steg (40) auf seinem äußeren Umfang mit einer Haut (42) bedeckt ist, die aus einem Material hergestellt ist, das eine Shore-Härte A von höchstens 70 aufweist, wobei die genannte Haut (42) axial über den starren Steg hinausragt.

9. Elektrohaushaltsgerät nach einem der Ansprüche 7 bis 8, **dadurch gekennzeichnet, dass** der starre Steg (40) aus Kunststoff hergestellt ist.

10. Elektrohaushaltsgerät nach einem der Ansprüche 1 bis 9, **dadurch gekennzeichnet, dass** die Haut (42) aus Elastomer hergestellt ist.

## Claims

1. Food preparation household electrical appliance designed to be held in the hand comprising a housing (1) containing a motor (2) and comprising an attached front element (3) comprising an outer surface defining at least a visible part of said housing (1), **characterised in that** said front element (3) is held on the housing (1) by means of a fastener (4) coming edge to edge with the front element (3) and **in that** said fastener (4) comprises at least a part (42A) made of material with Shore A hardness less than or equal to 70, mating with the front element (3).

2. Household electrical appliance according to claim 1, **characterised in that** it comprises a mixing leg (100) which couples removably with a longitudinal end of said housing (1) and **in that** said fastener (4) is interposed between the mixing leg (100) and the attached front element (3), the fastener (4) comprising, opposite the part (42A) mating with the front element (3), a bearing surface (42B) made of material with Shore A hardness less than or equal to 70, coming edge to edge with the mixing leg (100).

3. Household electrical appliance according to claim 2, **characterised in that** the fastener (4) is a fastening ring engaged on the longitudinal end of the housing (1) coupling to the mixing leg (100).

4. Household electrical appliance according to claim 3, **characterised in that** the housing (1) comprises an upper shell (11) and a lower shell (12) assembled to each other and **in that** the fastening ring (4) helps to hold the upper (11) and lower (12) shells against each other.

5. Household electrical appliance according to claim 4, **characterised in that** the fastening ring (4) has an inner diameter having locking elements (41) for locking the fastening ring (4) on the housing (1).

6. Household electrical appliance according to claim 5, **characterised in that** said locking elements consist of projections (41) which engage resiliently in grooves (19) formed on the upper and lower shells of the housing.

7. Household electrical appliance according to any one of claims 4 to 6, **characterised in that** the fastening ring (4) comprises an annular rigid core (40) having an inner surface coming into contact with the upper (11) and lower (12) shells of the housing.

8. Household electrical appliance according to claim 7, **characterised in that** the annular rigid core (40) is covered with a skin (42) made of a material of Shore A hardness less than or equal to 70 on its outer periphery, said skin (42) projecting axially from the rigid core.

9. Household electrical appliance according to claim 7 or 8, **characterised in that** the rigid core (40) is made of plastic material.

10. Household electrical appliance according to any one of claims 1 to 9, **characterised in that** the skin (42) is made of elastomer material.
